# EUROPÄISCHE PATENTANMELDUNG

(11) **EP 3 028 802 A1**
(43) Veröffentlichungstag der Anmeldung: **08.06.2016**
(21) Anmeldenummer: 15002714.2
(22) Anmeldetag: 18.09.2015
(51) Int. Cl.: B23K 23/00, E01B 29/44, B23K 101/26, E01B 35/00

(54) **VERFAHREN UND VORRICHTUNG ZUR VORBEREITUNG UND NACHBEHANDLUNG EINER SCHWEISSVERBINDUNG**

(30) Priorität: 04.12.2014 DE 102014017887
(71) Anmelder: Elektro-Thermit GmbH & Co. KG, 06132 Halle (DE)
(72) Erfinder: Junghähnel, Wolf-Dieter, D-15749 Mittenwalde (DE)
(74) Vertreter: Sobisch, Peter

(57) **Zusammenfassung**

Es wird ein Verfahren von beispielsweise zum Ausrichten von aluminothermisch zu verschweißenden Schienenenden (2, 3) vorgeschlagen, wobei vor der Darstellung einer in Richtung auf eine Schweißfuge (1) hin benötigten Überhöhung zumindest die Fahrflächen (8, 9) der Schienenenden (2, 3) berührungslos abgetastet, werden, wobei ausgehend von diesem, Oberflächenfehler in der Form von Materialanhäufungen (14) sowie Vertiefungen (15) enthaltenden, durch "Rohdaten" dargestellten Profil ein idealisiertes, keine Oberflächenfehler mehr enthaltendes und durch geometrisch einfache Geraden oder auch Ebenen darstellbares fiktives Profil erstellt wird, und wobei dieses idealisierte Profil zur Ausrichtung der Schienenenden (2, 3) benutzt wird. Das Verfahren ermöglicht infolge einer exakteren Ausrichtung ein ordnungsgemäßes Verschweißen auch verschlissener, großflächige Cberflächenschädigungen aufweisender Schienenenden sowie von unsauber geschnittenen Schienenenden, da Fehlmessungen weitestgehend vermieden werden.

## Beschreibung

Die Erfindung bezieht sich auf ein Verfahren entsprechend dem Oberbegriff des Anspruchs 1.

Es ist allgemein bekannt, zur Vorbereitung einer aluminothermischen Verschweißung zweier Schienenenden diese relativ zueinander derart auszurichten, dass nach vollendeter Schweißung gegebenenfalls im Anschluss an eine Nachbearbeitung ein über den Schienenstoß hinausgehend weitestgehend stetiger Verlauf einer Fahrfläche darstellbar ist. Neben geometrischen, den Querschnitt des Schienenprofils berücksichtigenden Randbedingungen müssen hierbei thermische, durch das örtliche Wärmeeinbringen während des Schweißvorgangs in den Schienenstrang bedingte, durch örtlich unterschiedliche Dehnungen sowie anschließende Schrumpfungen gekennzeichnete Vorgänge berücksichtigt werden. Bedingt durch die im Bereich des Schienenkopfes vorhandene Massekonzentration sind an dieser Stelle des Verbindungsbereichs der Schienenenden größere Schrumpfungen als an anderen Stellen des Querschnittsprofils zu erwarten, so dass zur \/errneidung einer nach Abkühlung zur Unterseite hin gerichteten Durchbiegung eine Ausrichtung der Schienenenden unter Einstellung einer Überhöhung beiderseits einer Schweißfuge erforderlich ist.

Eine Kontrolle einer erforderlichen Überhöhung erfolgt mit einem Lineal, welches mittig auf die Schweißfuge aufgelegt wird, wobei das korrekte Maß mit endseitigen Stellschrauben oder durch Einfügen von Überhöhungsmesskeilen in den Spalt zwischen dem Lineal und den Fahrflächen überprüft wird. Zusätzlich wird die seitliche Ausrichtung der Schienenenden kontrolliert. Ist nach diesen Vorgaben eine korrekte Ausrichtung erfolgt, können die zur Durchführung der eigentlichen Schweißung erforderlichen Schritte eingeleitet werden.

Die Vorgehensweise bei der Erstellung einer Schienenschweißung ist im Übrigen in der Europäischen Norm EN 14730, Teil 2 beschrieben.

Diese bekannte Technik zur Ausrichtung zu verschweißender Schienenenden ist problemlos anwendbar bei neuen oder neuwertigen Schienen. Sie stößt dann und in dem Maße an Grenzen, in dem es sich um gebrauchte Schienen, insbesondere im verlegten Gleis handelt. Gebrauchte Schienen weisen nutzungs- bzw. verschleißbedingte geometrische Fehler insbesondere in der Form von Vertiefungen der Fahrfläche wie Ausfahrungen, Risse, usw., jedoch auch konvexe, auf örtlichen Materialanhäufungen beruhende Fehler auf, die auf Schweißauftragungen, Riffelbildung, Schleuderstellen usw. zurückführbar sind. In diesen Fällen ist ein Ausrichten der Schienenenden durch einfaches Auflegen eines herkömmlichen Lineals nicht hinreichend zuverlässig möglich, so dass auch eine ordnungsgemäße Verschweißung der Schienenenden nicht darstellbar ist. Als ordnungsgemäße Verschweißung gilt eine solche, bei der nach Abkühlung, Schrumpfung und gegebenenfalls einer Nachbearbeitung in der Form eines Feinschliffs insbesondere im Bereich der Schweißstelle eine ebene und übergangsfreie, zur Darstellung eines stoßfreien Laufs eines Rades geeignete Fahrfläche entstanden ist.

Bei der praktischen Durchführung der Verschweißung zweier Schienenenden sind mehrere Phasen beginnend mit der ursprünglichen Ausrichtung über den eigentlichen Schweißvorgang bis zur Ausbildung einer erkalteten gegebenenfalls nachbehandelten Schweißverbindung zu unterscheiden, innerhalb welcher auch ein insbesondere die Fahrflächengeometrie beeinflussender Schrumpfu8ngsvorgang abläuft. Mögliche Nachbehandlungen bestehen in einem Grobschliff, einem Feinschliff, einem Nachrichten sowie bei extremen durch diese Korrekturmaßnahmen nicht mehr zu behebenden Fehlern in einer Neuverschweißung. Ein Grobschliff wird üblicherweise im Anschluss an den Schweißvorgang, somit an der noch warmen Schweißstelle durchgeführt, wobei ein Feinschliff, der dazu dient, die Schweißstelle an vorgegebene Toleranzen anzupassen, erst nach Erkalten der Schweißstelle, somit nach einem Abschluss von Schrumpfungsvorgängen durchgeführt wird.

Eine Kontrolle des Schweißergebnisses unmittelbar im Anschluss an einen Grobschliff wird nicht durchgeführt, da dies mit einem einfachen Stahllineal nicht bzw. kaum möglich ist. Andererseits sind gerade in dieser Phase noch Korrekturmaßnahmen wie z. B. ein Biegen des Schweißstoßes möglich. Eine Kontrolle des Schweißergebnisses erst im Anschluss an den an dem erkalteten Schweißstoß durchgeführten Feinschliff ermöglicht derartige Korrekturmaßnahmen im Regelfall nicht. Der Feinschliff wird nach Erkalten des Schweißstoßes und damit einem Abschluss aller Schrumpfungsvorgänge durchgeführt. Betrachtet man den gesamten Zeitbedarf für die Herstellung einer Schienenschweißverbindung ist festzustellen, dass ein wesentlicher Teil dadurch bedingt ist, dass ein Feinschliff erst nach dem Abschluss der Schrumpfungsvorgänge durchgeführt wird.

Es ist die Aufgabe der Erfindung, ein Verfahren der eingangs bezeichneten Art zu konzipieren, welches sich auf verbesserte Maßnahmen zur Vorbereitung sowie Kontrolle der Toleranzhaltigkeit einer Schweißverbindung, insbesondere zur Ausrichtung von gebrauchten, teilweise beschädigten Schienen auch im verlegten Gleis sowie zur Nachbehandlung einer Schweißverbindung nach dem Verschweißen anwendbar ist. Gelöst ist diese Aufgabe bei einem solchen Verfahren durch die Merkmale des Kennzeichnungsteils des Anspruchs 1.

Erfindungswesentlich ist, dass jegliche Maßnahmen zur Ausrichtung der zu verschweißenden Schienenenden sowie eventuelle Korrekturmaßnahmen bzw. Nachbehandlungen nach Durchführung der Schweißung nicht nach dem tatsächlichen, durch Störstellen der unterschiedlichsten Art gekennzeichneten Verlauf der Fahrflächen sondern nach einem fiktiven Oberflächenverlauf erfolgen, der einem fehlerfreien Verlauf der Fahrflächen entspricht. Hierzu wird zunächst ein erster Datensatz des Fahrflächenverlaufs ermittelt, der dem tatsächlichen Oberflächenverlauf entspricht und aus dem durch Eliminierung von Störstellen ein zweiter Datensatz erstellt wird, der einem fiktiven fehlerfreien Oberflächenverlauf entspricht. Dieser zweite Datensatz wird analytisch aus dem ersten Datensatz erstellt und bildet die Grundlage für Maßnahmen der Vorbereitung einer Schweißverbindung oder auch der Nachbehandlung einer Schweißverbindung und kann der jeweiligen Zielsetzung angepasst sein. Die genannten Maßnahmen werden erfindungsgemäß nur nach dem fiktiven Oberflächenverlauf und nicht nach dem tatsächlichen Oberflächenverlauf durchgeführt.

Entsprechend den Merkmalen des Anspruchs 2 erfolgt die Ausrichtung der Schienenenden, insbesondere die Einstellung eines Überhöhungswinkels beiderseits einer Schweißfuge nicht anhand des tatsächlichen, durch Störstellen gekennzeichneten Oberflächenverlaufs der Fahrflächen sondern nach einem fiktiven Oberflächenverlauf, der ausgehend von dem tatsächlichen Oberflächenverlauf ermittelt wird. Der fiktive Oberflächenverlauf unterscheidet sich von dem tatsächlichen Oberflächenverlauf dadurch, dass jegliche Störstellen eliminiert sind, so dass ein idealisierter, mit neuen bzw. neuwertigen Schienenenden vergleichbarer Oberflächenverlauf entsteht. Bei der Ausrichtung anhand eines solchen fiktiven Oberflächenverlaufs werden jegliche Mess- und Ausrichtungsfehler vermieden, die durch bloßes Auflegen eines Lineals auf geometrische Anomalien aufweisende schadhafte Schienenenden oder eines Messkeiles, unsauber geschnittene Schienenenden etc. entstehen. Jegliche Oberflächenbereiche, welche Schädigungen enthalten, werden bei der Ermittlung der fiktiven Oberflächen "herausgerechnet". Die Ausrichtung der Schienenenden zwecks Vorbereitung einer Verschweißung der Schienenenden erfolgt anhand der fiktiven Oberflächen, so dass die Erzielung einer sachgerechten Schweißung sichergestellt ist.

Die Merkmale des Anspruchs 3 sind auf eine linienhafte Abtastung der auszurich- " tenden Oberfläche entlang einer Messlinie gerichtet, die sich in Längsrichtung der Schienenenden erstreckt. Entlang dieser Messlinie wird der Oberflächenverlauf vermessen und registriert. Durch Mehrfachabtastungen entlang zueinander paralleler und voneinander beabstandeter Messlinien kann ein flächenhaftes Bild der Oberflächen erstellt werden, welches die Grundlage für die Erstellung fiktiver Oberflächen bildet.

Die Merkmale des Anspruchs 4 sind auf eine matrixartige durch Bildelemente gekennzeichnete Abtastung der auszurichtenden Oberflächen gerichtet, Auch hierbei wird ein flächiges Bild der auszurichtenden Oberflächen erstellt, auf deren Grundlage fiktive Oberflächen dargestellt werden, welche zur Ausrichtung der Schienenenden benutzt werden.

Die Merkmale der Ansprüche 5 und 6 sind auf technisch unterschiedliche Varianten der Abtastung der zu vermessenden Oberflächen gerichtet. Diese Abtastung kann unter Berührung der Oberflächen, z. B. mittels Messrollen, Taststiften und dergleichen oder berührungslos, z. B. mittels kapazitiver oder induktiver elektrischer Messverfahren erfolgen.

In jedem Fall, nämlich sowohl bei berührender als auch bei berührungsloser Vermessung der Oberflächen ist es vorteilhaft, insbesondere mit Hinblick auf eine sich anschließende analytische Weiterverarbeitung der aufgenommenen Messungen diese zu digitalisieren.

Entsprechend den Merkmalen des Anspruchs 7 wird zu Kontrollzwecken die Lage der Schienenenden in einer Schweißverbindung nach erfolgtem Grobschliff und einem Erkalten des Schweißstoßes, somit vor einem Feinschliff durchgeführt. Der Feinschliff bildet hierbei das Endergebnis der Schweißung, welches vorgebbaren Toleranzen genügen muss. Eine Lagevermessung der Schienenenden in dieser Phase ist faktisch nur unter Verwendung fiktiver Fahrflächen - wie vorstehend dargelegt - durchführbar. Sie ist im Allgemeinen nicht oder nahezu nicht durch bloßes Anlegen eines einfachen Stahllineals mit der erforderlichen Messgenauigkeit durchführbar. Es besteht jedoch ein starkes Interesse, eine solche Vermessung durchzuführen, da in dieser Phase noch Korrekturmaßnahmen einleitbar sind, die nach erfolgtem Feinschliff regelmäßig nicht mehr in Betracht kommen.

Hinzutritt der Umstand, dass das erfindungsgemäße Verfahren der fiktiven Oberflächen die Möglichkeit bietet, das Ausrichten der Schienenenden als vorbereitende Maßnahme und das Arbeitsergebnis, nämlich die erstellte, erkaltete Schweißverbindung nach dem Grobschliff in eine, insbesondere den Schrumpfvorgang einbeziehende Relation zu setzen, auf deren Grundlage eine Prognose herleitbar ist, ob eine vorhandene Schweißung durch anschließenden Feinschliff noch in ein vorgegebenes Toleranzfeld bringbar ist oder nicht. Hierbei kann mit der Maßgabe vorgegangen werden, dass beispielsweise bei einer aluminothermischen Schweißung zumindest der Bereich des aluminothermischen Stahles, insbesondere der Schweißfuge als fehlerbehaftete Zone betrachtet wird, die bei der Ermittlung der fiktiven Oberflächen nicht berücksichtigt wird. Die fiktiven Oberflächen im Bereich der Schweißverbindung können somit durch Extrapolation der fehlerfreien Bereiche beiderseits der Schweißfuge in diese hinein dargestellt werden. In Abhängigkeit von der Größenordnung des hierbei festgestellten geometrischen Fehler und den Vorgaben einer Bahnverwaltung ergeben sich für die weitere Behandlung der Schweißverbindung die Handlungsalternativen dass die Fehler durch einen Feinschliff oder ein Nachrichten ausgleichbar sind oder dass eine Neuverschweißung erforderlich wird.

Die fiktiven Oberflächen werden entsprechend den Merkmalen des Anspruchs 8 durch einfache geometrische Figuren abgebildet wie z. B. Geraden oder Ebenen. Diese ermöglichen die exakte Einstellung eines Überhöhungswinkels gegenüber einer Bezugsebene, z. B. einer Horizontalebene.

Es ist ferner die Aufgabe der Erfindung, eine Vorrichtung zur Durchführung des erfindungsgemäßen Verfahrens bereit zu stellen, welche insbesondere im Rahmen einer Ausrichtung von Oberflächenschädigungen aufweisender Schienenenden im verlegten Gleis jedoch auch im Rahmen einer Nachbehandlung einer Schweißverbindung, wo immer es um eine Ermittlung fiktiver Oberflächen im Rahmen des erfindungsgemäßen Verfahrens geht, vorteilhaft Verwendung finden kann, so dass auch in diesen Fällen eine zweckentsprechende Ausrichtung sowie eine sachgerechte Verschweißung darstellbar sind. Gelöst ist diese Aufgabe bei einer solchen Vorrichtung durch die Merkmalle des Kennzeichnungsteils des Anspruchs 9.

Erfindungswesentlich ist ein über Auflagekörper beiderseits einer Schweißfuge auflegbares Lineal, innerhalb welchem ein Sensor in dessen Längsrichtung geführt ist, der zur Abtastung der zu vermessenden Oberflächen sowie zur Generierung eines den abgetasteten tatsächlichen Oberflächenverlauf beschreibenden ersten Datensatzes eingerichtet ist. Der Sensor kann entlang des Lineals in vorteilhafter Weise motorisch bewegbar angeordnet sein. Er kann zur Aufzeichnung entlang einer Messlinie oder zur Aufzeichnung einer Folge von Bildelementen eingerichtet sein, die in ihrer Gesamtheit ein vollständiges Abbild der zu vermessenden Oberflächen bilden. Nachdem das Lineal nicht auf den zu vermessenden Schienenenden aufliegt, wird das Messergebnis auch nicht durch Oberflächenanomalien beeinflusst. Erfindungswesentlich ist ferner eine mit dem Lineal in geeigneter Weise, z.B. drahtlos in Wirkverbindung stehende Auswerteeinheit, mittels welcher ausgehend von dem genannten ersten Datensatz ein zweiter, die fiktiven, von Störstellen bzw. Anomalien jeglicher Art bereinigten Oberflächen beschreibender Datensatz erstellt wird, der der anschließenden Ausrichtung der Schienenenden zugrunde gelegt wird.

Man erkennt, dass unter Verwendung der erfindungsgemäßen Vorrichtung, nämlich eines elektronischen Lineals in Verbindung mit dem erfindungsgemäßen Verfahren der fiktiven, das heißt idealisierten, nämlich von Störstellen jeglicher Art befreiten Oberflächen, insbesondere Fahrflächen auch in schwierigen Fällen, nämlich bei geometrischen Anomalien der Fahrflächen der zu verschweißenden Schienenenden ein befriedigendes Ausricht- und Schweißergebnis darstellbar ist. Ferner eröffnet das erfindungsgemäße Verfahren den Vorteil, dass über eine Vermessung der Verbindungsgeometrie im Anschluss an einen Grobschliff Geometriefehler so frühzeitig erkannt werden, dass auch Korrekturmaßnahmen wie ein Nachrichten der Schienenverbindung in der Form eines Biegens noch zur Verfügung stehen.

Die Erfindung ist vorteilhaft bei aluminothermischen Schweißungen anwendbar - sie kann auch bei dem Verfahren einer Abbrennstumpfschweißung benutzt werden.

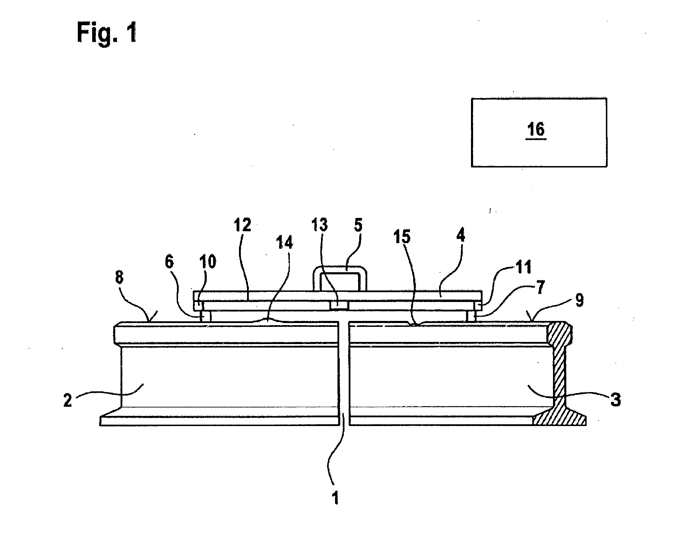

Das erfindungsgemäße Verfahren wird im Folgenden unter Bezugnahme auf die in Fig. 1 gezeigte Messanordnung näher erläutert werden.

Fig. 1 zeigt zwei einander gegenüberstehende, durch eine Schweißfuge 1 voneinander beabstandete und zueinander fluchtend angeordnete Schienenenden 2, 3, die zur Vorbereitung einer Verschweißung, insbesondere einer aluminothermischen Verschweißung zum Ausgleich einer infolge Abkühlung zu erwartenden Schrumpfung in eine in Richtung auf die Schweißfuge 1 hin überhöhte Position zu überführen sind.

Mit 4 ist ein mit einem mittig angebrachten Handgriff 5 ausgerüstetes Lineal bezeichnet, welches über an beiden Enden angeordnete Auflagekörper 6, 7, die Schweißfuge 1 symmetrisch überdeckend, auf den Fahrflächen 8, 9 der Schienenenden 2, 3 aufgelagert ist. Die Auflagekörper 6, 7 können mit dem Lineal 4 in fester Verbindung stehen.

Innerhalb des Lineals 4, und zwar in dessen Längsrichtung zwischen den Endpunkten 10, 11 entlang einer Führung 12 verschiebbar befindet sich ein Sensor 13, der dazu bestimmt und eingerichtet ist, das Oberflächenprofil der Fahrflächen 8, 9 abzutasten, dessen Verlauf gegenüber einer Nulllinie, deren Lage durch die Erstreckung der Auflagekörper 6, 7 senkrecht zu den Fahrflächen 8, 9 definierbar ist, zu ermitteln. Das der Oberflächenabtastung zugrundeliegende Messprinzip kann auf einer mechanischen, auf einer Berührung der Fahrflächen 8, 9 basierenden Methode beruhen - es kann sich gleichermaßen auch um ein berührungsloses beispielsweise kapazitives oder induktives elektrisches Messprinzip handeln.

Entsprechend dem zugrundeliegenden Messprinzip ist die den Fahrflächen 8, 9 zugekehrte Unterseite des Lineals 4 in zeichnerisch nicht dargestellter Weise mit einem Öffnung bzw. einem Fenster versehen, über welche /welches der Sensor 13 mit den zu vermessenden Fahrflächen 8, 9 in Wirkverbindung steht.

Grundsätzlich kann an dieser Stelle jedes zur Abstandsmessung sowie zur Profilaufzeichnung geeignete Messprinzip Verwendung finden.

Die vorstehend dargelegte Profilaufzeichnung erfolgt linienhaft entlang einer Linie in Längsrichtung der Schienenenden 2, 3 zwischen den Endpunkten 10, 11, welche durch die Auflageposition der Auflagekörper 6, 7 festgelegt ist. Durch Parallelverschiebung quer zu der Längserstreckung der Schienenenden 2, 3 auf den Fahrflächen 8, 9 können mehrere Linien auf den Fahrflächen abgetastet werden, aus deren Gesamtheit ein flächenhaftes Abbild der Oberflächengestalt der Fahrflächen 8, 9 generierbar ist.

Die Fahrflächen 8, 9, insbesondere dann, wenn es sich um gebrauchte Schienen handelt, sind mit Fehlern der Form von Materialanhäufungen 14 oder auch Vertiefungen 15 versehen, welche bezüglich einer Grundebene der Fahrflächen bei der Oberflächenabtastung in ihrer vertikalen und flächenhaften Erstreckung feststellbar sind.

Zur Durchführung einer Messung entlang einer Messlinie zwischen den Endpunkten 10, 11, die beispielsweise einen Abstand von 1000 mm haben können, werden etwa 1000 Messpunkte auf dieser Linie abgetastet, welche das Oberflächenprofil entlang dieser Linie beschreiben und als Rohdaten in geeigneter, zeichnerisch nicht dargestellter Weise, nämlich leitungsgebunden oder über eine Funkstrecke einer Auswerteeinheit 16 übertragen. Diese Rohdaten beschreiben den aktuellen Zustand des Oberflächenprofils der Fahrflächen 8, 9, der für eine herkömmliche Ausrichtung durch bloßes Auflegen eines Lineals zwecks Vorbereitung einer Verschweißung nicht oder nur sehr bedingt geeignet ist.

Im Bedarfsfall werden in Längsrichtung der beiden Schienenenden 2, 3 mehrere zueinander parallele Messlinien aufgezeichnet, so dass anhand der Vielzahl der so gewonnenen Messpunkte eine Darstellung flächiger Grafiken der beiden Fahrflächen 8, 9 relativ zu einer durch die Längen der Auflagekörper 6, 7 definierbaren Bezugsebene möglich ist.

Erfindungsgemäß werden die, das tatsächliche Oberflächenprofil der beiden Schienenenden 8, 9 beschreibenden, in digitaler Form vorliegenden Rohdatensätze nunmehr dahingehend aufbereitet, dass Fehler bzw. Störstellen wie die genannten Materialanhäufungen 14 sowie die Vertiefungen 15 als solche identifiziert und in Verbindung mit den die übrigen Bereiche der Fahrflächen 8, 9 beschreibenden Messpunkten zur Generierung einer idealisierten, durch Geraden bzw. Ebenen darstellbaren, somit fiktiven Fahrfläche benutzt werden.

Für die Behandlung der die Fehlerstellen in den Fahrflächen 8, 9 beschreibenden Messpunkte im Rahmen der Generierung idealisierter Fahrflächen bieten sich unterschiedliche analytische Verfahren an. Beispielsweise können die die Störstellen beschreibenden Messpunkte ignoriert und durch solche Messpunkte ersetzt werden, die fehlerfreie Oberflächenbereiche beschreiben, so dass idealisierte Fahrflächen entstehen, die als solche fehlerfrei sind.

Erfindungsgemäß werden der Ausrichtung der Schienenenden 2, 3 die wie vorstehend dargelegt idealisierten Fahrflächen der Schienenenden 2, 3 und nicht die tatsächlichen fehlerbehafteten Schienenenden 2, 3 zugrunde gelegt, wobei die eigentliche Ausrichtung wie an sich bekannt durchgeführt werden kann.

Die Auswerteeinheit 16 enthält sämtliche, für die Verarbeitung der Rohdaten sowie die Erstellung der idealisierten fiktiven Fahrflächen erforderlichen Funktionselemente. Sie kann insbesondere auch einen Monitor zur visuellen Darstellung der Messergebnisse umfassen. Wesentlich ist, dass das Auswerteergebnis, nämlich die genannten fiktiven Fahrflächen relativ zu einer definierten Bezugslinie bzw. Bezugsebene ermittelt werden.

**Bezugszeichenliste:**

| | | | |
|---|---|---|---|
| 1. | Schweißfuge | 10. | Endpunkt |
| 2. | Schienenende | 11. | Endpunkt |
| 3. | Schienenende | 12. | Führung |
| 4. | Lineal | 13. | Sensor |
| 5. | Handgriff | 14. | Materialanhäufung |
| 6. | Auflagekörper | 15. | Vertiefung |
| 7. | Auflagekörper | 16. | Auswerteeinheit |
| 8. | Fahrfläche | | |
| 9. | Fahrfläche | | |

## Patentansprüche

1. Verfahren zur Vorbereitung und Nachbehandlung einer Schweißverbindung zwischen zwei Schienenenden (2, 3) im Rahmen einer herzustellenden oder einer hergestellten Schienenverbindung, insbesondere Kontrollmaßnahmen betreffend deren Verbindungsgeometrie, **dadurch gekennzeichnet, dass** zumindest von den Fahrflächen (8, 9) der sich unter Belassung der Schweißfuge (1) erstreckenden Schienenenden (2, 3) ein erster, deren tatsächliche Störstellen aufweisende Oberflächen beschreibender Datensatz erstellt wird, dass ausgehend von diesem ersten Datensatz ein zweiter, von den Störstellen befreiter, jeweils fiktive Oberflächen der Fahrflächen (8, 9) beschreibender Datensatz erstellt wird und dass Maßnahmen zur Vorbereitung der Schweißung sowie eventuelle Korrekturmaßnahmen anhand des fiktiven Oberflächenverlaufs der Fahrflächen (8, 9) durchgeführt werden.

2. Verfahren nach Anspruch 1, **dadurch gekennzeichnet, dass** die Schienenenden (2, 3) zur Vorbereitung einer Schweißverbindung jeweils nach Maßgabe eines in Richtung auf eine Schweißfuge (1) hin ansteigenden Überhöhungswinkels ausgerichtet werden, und dass die Geometrie der Schweißverbildung, insbesondere der Überhöhungswinkel der Schienenenden (2, 3) ausgehend von dem fiktiven Oberflächenverlauf eingestellt wird

3. Verfahren nach Anspruch 1 oder 2, **dadurch gekennzeichnet, dass** im Rahmen der Erstellung des ersten Datensatzes die Fahrflächen (8, 9) beider Schienenenden (2, 3) in deren Längsrichtung beiderseits der Schweißfuge (1) entlang wenigstens einer Messlinie abgetastet werden.

4. Verfahren nach Anspruch 1 oder 2, **dadurch gekennzeichnet, dass** im Rahmen der Erstellung des ersten Datensatzes die Fahrflächen (8, 9) beider Schienenenden (2, 3) beiderseits der Schweißfuge (1) flächenhaft abgetastet werden.

5. Verfahren nach einem der Ansprüche 1 bis 4, **dadurch gekennzeichnet, dass** im Rahmen der Erstellung des ersten Datensatzes die Fahrflächen (8, 9) unter Verwendung eines berührungslosen Messverfahrens abgetastet werden.

6. Verfahren nach einem der Ansprüche 1 bis 4, **dadurch gekennzeichnet, dass** im Rahmen der Erstellung des ersten Datensatzes die Fahrflächen (8, 9) unter Verwendung eines berührenden Messverfahrens abgetastet werden.

7. Verfahren nach einem der Ansprüche 1 bis 6, **dadurch gekennzeichnet, dass** zur Kontrolle einer hergestellten Schweißverbindung eine Vermessung der Lage der Schienenenden (2, 3) nach Durchführung eines Grobschliffs und einem Erkalten des Schweißstoßes durchgeführt wird.

8. Verfahren nach einem der Ansprüche 1 bis 7, **dadurch gekennzeichnet, dass** im Rahmen der Erstellung des zweiten Datensatzes die fiktiven Oberflächen durch einfache geometrische Figuren wie Geraden und Ebenen dargestellt werden.

9. Vorrichtung zur Durchführung des Verfahrens nach einem der Ansprüche 1 bis 8, nämlich zur Verwendung bei der Ausrichtung zweier zu verschweißender Schienenenden (2, 3) sowie zur Kontrolle der Lage der verschweißten Schienenenden (2, 3), **gekennzeichnet durch** ein über endseitige Auflagekörper (6, 7) zur Auflage auf den Schienenenden (2, 3) beiderseits der Schweißfuge (1) bestimmtes Lineal (4), wobei innerhalb des Lineals (4), in dessen Längsrichtung verschiebbar ein Sensor (13) aufgenommen ist, der zur Abtastung der zugekehrten Flächen der Schienenenden (2, 3) entlang einer Messlinie zwischen den Auflagekörpern (6, 7) und zur Generierung des genannten ersten Datensatzes bestimmt und eingerichtet ist und **durch** eine mit dem Lineal (4) in Wirkverbindung stehende, zur Erstellung des genannten zweiten Datensatzes bestimmte und eingerichtete Auswerteeinheit (16).
